# EUROPEAN PATENT SPECIFICATION

(11) **EP 3 430 291 B1**
(45) Date of publication and mention of the grant of the patent: **23.06.2021**
(21) Application number: 16753993.1
(22) Date of filing: 23.05.2016
(51) Int. Cl.: F16J 15/02, B05B 15/65, F16L 27/073, B05B 15/654

(54) **SEALING GASKET HAVING A THROUGH HOLE WITH A CROSS SECTION DECREASING IN SIZE, NOZZLE WHICH CAN BE COUPLED TO SAID GASKET, AND SPRAYING END COMPRISING SAID NOZZLE COUPLED TO SAID GASKET**
DICHTUNG MIT DURCHGANGSLOCH MIT EINEM IN DER GRÖSSE KLEINER WERDENDEN QUERSCHNITT, AN DIE BESAGTE DICHTUNG KOPPELBARE DÜSE UND SPRÜHENDE MIT BESAGTER DÜSE, DIE AN BESAGTE DICHTUNG KOPPELBAR IST
JOINT D'ÉTANCHÉITÉ COMPORTANT UN TROU TRAVERSANT DE SECTION TRANSVERSALE DE DIMENSION DÉCROISSANTE, BUSE POUVANT ÊTRE ACCOUPLÉE AUDIT JOINT, ET EXTRÉMITÉ DE PULVÉRISATION COMPRENANT LADITE BUSE ACCOUPLÉE AUDIT JOINT

(30) Priority: 16.03.2016 IT UA20161714
(43) Date of publication of application: 23.01.2019
(73) Proprietor: Pnr Italia S.r.L., 27058 Voghera (PV) (IT)
(72) Inventor: TONINI, Federico, 6826 Riva San Vitale (CH)
(74) Representative: Mozzanica, Luca
(86) International application number: PCT/IT2016/000135
(87) International publication number: WO 2017/158629

(56) References cited:
- EP-A1- 1 748 232
- EP-A2- 0 437 112
- DE-A1-102009 024 111
- US-A- 2 628 457

## Description

### Field of application of the invention

The present invention relates to the technical field concerning sealing devices, i.e. devices intended to be interposed between two surfaces in order to prevent a fluid from passing therebetween. More precisely, the present invention relates to a spraying end including a nozzle coupled to a sealing gasket comprising a through hole delimited by at least one elastically deformable wall.

Here and later in the present description, the term "sealing gasket" means a device which can be used to mutually connect two elements which can be crossed by a fluid so as to allow the latter to flow from one element to the other without coming out of the connection area. Sealing gaskets are generally interposed between said elements at their joining area. Elements which can be crossed by a fluid and mutually connected with the interposition of a gasket may be two pipes, such as for example a spray nozzle and a nipple by means of which the nozzle communicates with a pipe for delivering the fluid to be sprayed.

Here and later in the present description, the term "spraying end" means a component of a spray device (such as e.g. a nebulizer) comprising a nozzle and an element for joining it to a fluid delivery pipe. Said joining element may advantageously comprise a nipple connected to the delivery pipe and a ball joint connected to the nozzle and rotatable in a seat made in the nipple.

### Overview of the prior art

Sealing gaskets are generally annular devices made of an elastomeric material. The most well-known sealing gaskets are the so-called "O-rings", i.e. annular gaskets having a circular cross section. The cross section of a sealing gasket may be square, rectangular or C-shaped, rather than circular.

By way of example, sealing gaskets are used when there is the need to join the outlet mouth of a first pipe to the inlet mouth of a second pipe so that no fluid comes out of the pipes in their junction point. In particular, the second pipe may correspond to a spray nozzle and the first pipe may correspond to a nipple connected to a fluid delivery pipe.

If the pipes have the same cross section at the aforesaid mouths, the two mouths may be opposed by interposing a sealing gasket therebetween to mutually join the pipes. Once the junction has been made, the gasket is tightened between the two pipes in axial direction (that is in a direction which is orthogonal to the plane in which the ring would lie if it were schematized using a circumference).

If the inner diameter of the first pipe at the outlet mouth is greater than the outer diameter of the second pipe at the inlet mouth, an end stretch of the second pipe may be inserted into an end stretch of the first pipe by interposing a sealing gasket between said end stretches in order to join the pipes. Once the junction has been made, the gasket is tightened between the two pipes in radial direction.

In both cases, the tightness in the junction point depends on the amount of compression of the gasket between the two pipes. The greater said compression, the lesser the probability that a fluid leak occurs in the junction point. However, elastomeric rings are difficult to be compressed in axial or radial direction so that a very strong tightening could be required in order to obtain a compression of a few tenths of mm² in the cross section of an O-ring. If the pipes are made of polymeric material, this means that the strength of this tightening could deform the pipes in the junction point, thus obtaining the negative effect of compromising the tightness of the junction. In addition, if an elastomeric ring is used to sealingly connect a spray nozzle to a nipple, both made of steel, the coupling tolerances may have values such as not to ensure an optimal tightness of the gasket. Also in this case, there could be the need to tighten the gasket between the two pipes even more in order to avoid fluid leaks. As mentioned above, an increased tightening cannot always be obtained due to the compressive resistance of the elastomeric ring. Similarly, when the nozzle and the nipple are made of polymeric material, the tightness of the gasket may be substantially uncertain, such as to require increased tightening.

Here, as already mentioned, even if it can be obtained, the increased tightening could result in a deformation of the pipes which would further compromise the tightness of the gasket in the junction point. In these cases, at present, a second gasket needs to be applied, which compensates for the loss of tightness at the gasket already present.

EP 0437112 A2 discloses a dispensing nozzle for a liquid composition introduced through an inlet having its discharge nozzle orifice closable by the tip of a longitudinally movable needle valve member. The point of entry of the needle valve member into the dispensing chamber is sealed by means of an elongate annular seal portion which extends and contracts in response to longitudinal movement of the needle valve member while simultaneously undergoes a change in external cross-section whereby the volume of the longitudinal portion of the seal remains substantially unaltered and the shaft of the needle valve member displaces longitudinally substantially without sliding relative to the seal portion

US2,628,487 discloses a spraying end according to the preamble of claim 1.

### Objects of the invention

It is the object of the present invention to overcome the aforesaid drawbacks by indicating a spraying end including a nozzle coupled to a gasket which, as compared to known gaskets, is capable of ensuring an improved tightness, the tightening of the gasket between the two elements to be mutually joined being equal.

### Summary of the invention

The present invention relates to a spraying end according to claim 1 comprising a nozzle, preferably of the spraying type, which is coupled to a gasket at an inlet mouth thereof. The sealing gasket comprises a through hole delimited by at least one preferably elastically deformable wall.

The cross section of the through hole has a decreasing size from an inlet mouth of the hole toward an outlet mouth thereof.

Incidentally, the through hole of the gasket is the hole through which a fluid flows when passing from a first pipe to a second pipe mutually joined with the interposition of the gasket. By way of example, the second pipe corresponds to a spray nozzle and the first pipe corresponds to a nipple connected to a feed pipe of the nozzle.

"Inlet mouth" of the through hole means the cross section of the through hole at which a fluid enters the gasket.

"Outlet mouth" of the through hole means the cross section of the through hole at which a fluid leaves the gasket after having crossed the latter.

The gasket is to be installed so that the delimiting wall of the through hole is tightened between the two pipes at said inlet mouth and preferably at least partially penetrates the second pipe at the outlet mouth.

Unlike what occurs when using gaskets belonging to the prior art, when said gasket is to be installed in a junction point, the direction in which the fluid flows in said junction point is to be considered. In particular, the gasket is to be installed so that when the fluid crosses the gasket, it flows from the inlet mouth toward the outlet mouth. Advantageously, due to the decreasing size of the cross section of the through hole, when a fluid crosses the gasket, it deforms the delimiting wall of the through hole in radial direction by pressing it against the inner wall of the second pipe. This prevents the fluid from reaching the area in which the second pipe is pressed against said delimiting wall at the inlet mouth. In other words, the pressure exerted by the fluid when crossing the gasket pushes the latter against the inlet of the second pipe, thus ensuring the tightness. Therefore, the compression to which the gasket is to be subjected to is less than that of gaskets belonging to the prior art.

In addition, due to its particular shape, the gasket is more deformable both in axial direction and in radial direction as compared to current elastomeric annular gaskets, the effort being equal. This makes assembling the gasket easier as compared to known gaskets.

Further innovative features of the present invention are described in the dependent claims.

According to one aspect of the invention, the inlet and outlet mouths of the through hole are circular.

According to another aspect of the invention, the delimiting wall of the through hole is at least partially almost shaped like a truncated cone.

According to another aspect of the invention, the delimiting wall of the through hole radially widens at the inlet mouth to form a ring which delimits the inlet mouth. Said ring will be denoted below in the present description with the term "flange".

Advantageously, the gasket is interposed between the two pipes at said flange when it is installed in their junction point.

According to another aspect of the invention, the flange axially extends toward the outlet mouth to form a raised edge which radially delimits the gasket of the invention.

According to another aspect of the invention, said edge is almost cylindrical or at least partially spherical.

The nozzle, preferably of the spraying type, comprising an inlet mouth at which it can be coupled to the aforesaid gasket,
is at least partially flared from said inlet mouth toward said outlet mouth thereof. Advantageously, since the nozzle is shaped at its inlet mouth like the through hole of the gasket of the invention, the adherence of the delimiting wall of the through hole of the gasket to the inner wall of the nozzle when a fluid passes through the gasket into the nozzle is greater than that obtained with a non-flared wall of the nozzle. Increased adherence results in better tightness of the gasket (which is ensured by the pressure exerted by the fluid when crossing the gasket).

### Brief description of the drawings

Further objects and advantages of the present invention will become apparent from the following detailed description of an embodiment thereof and from the accompanying drawings, merely given by way of a non-limiting example, in which:
- **figure 1** shows a diagrammatic straight section of a sealing gasket not belonging to the present invention;
- **figure 2** shows a top plan view of the gasket in figure 1;
- **figure 3** shows a diagrammatic straight section of a first spraying end comprising a spray nozzle joined to a nipple by means of the gasket in figure 1;
- **figure 4** shows a diagrammatic straight section of a second spraying end according to the invention comprising a spray nozzle joined to a nipple by means of a ball joint and a variant of the gasket in figure 1;
- **figure 5** shows a diagrammatic straight section of a variant of the spraying end in figure 4, also according to the invention.

### Detailed description of some preferred embodiments of the invention

In the rest of the present description, a drawing may also be shown with reference to elements not expressly indicated in that drawing but in other drawings. The scale and proportions of the different elements depicted do not necessarily correspond to the actual ones.

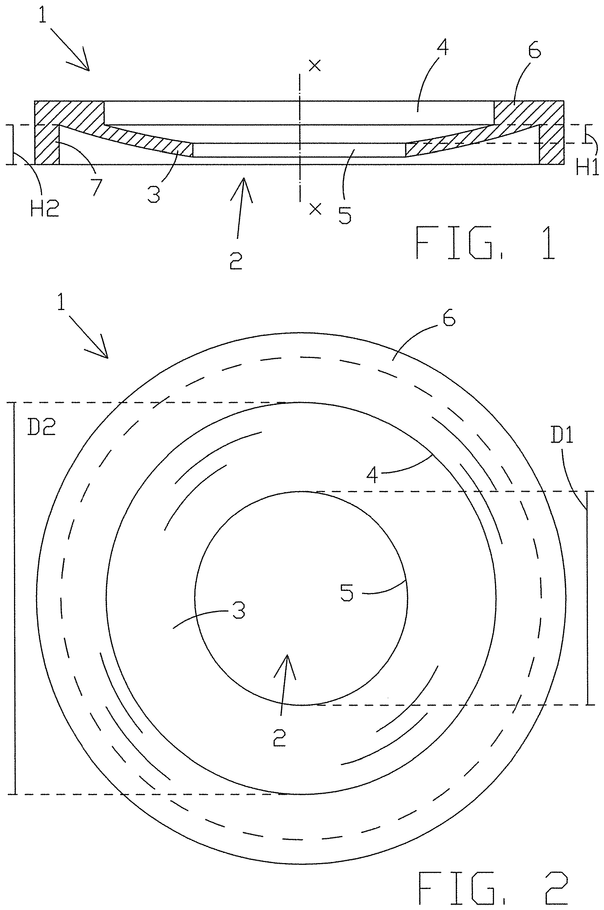

**Figures 1** and **2** show a sealing gasket 1 having an almost annular shape and comprising a through hole 2 which crosses gasket 1 in axial direction (that is, in a direction orthogonal to the plane in which gasket 1 would lie if it were diagrammatically shown by means of a circumference, i.e. orthogonal to the plane in figure 2). Hole 2 is delimited, by way of example, by a single wall 3 which is shaped so that hole 2 has a cross section, the size of which decreases from an inlet mouth 4 (top mouth in figure 1) toward and outlet mouth 5 (bottom mouth in figure 1) of hole 2. More preferably, wall 3 is shaped so that the mouths 4 and 5 are circular, coaxial and mutually parallel. Even more preferably, wall 3 is shaped almost like a straight truncated cone in the stretch between the mouths 4 and 5. In particular, gasket 1 is symmetrical with respect to the longitudinal symmetry axis X-X of said straight truncated cone.

The ratio of diameter D1 of the outlet mouth 5 to diameter D2 of the inlet mouth 4 is preferably greater than 0.0111. The ratio of distance H1 between the mouths 4 and 5 to diameter D1 is preferably greater than 0.125.

As can be seen in figure 1, wall 3 radially widens at mouth 4 to form a flange 6, which is preferably shaped like a circular crown which delimits mouth 4. Flange 6 extends in axial direction toward mouth 5 to form a preferably cylindrical edge 7 which radially delimits gasket 1. The ratio of the height H2 of edge 7 (measured in axial direction) to distance H1 between the mouths 4 and 5 is preferably greater than 0.03.

Gasket 1 is preferably made of elastomeric material, so as to be elastically deformable both in axial direction and in radial direction.

In an alternative embodiment of gasket 1 (not shown in the drawings), in the stretch between the inlet mouth and the outlet mouth of the hole, the delimiting wall of the through hole is shaped like a two-based spherical segment with the concavity facing the outlet mouth.

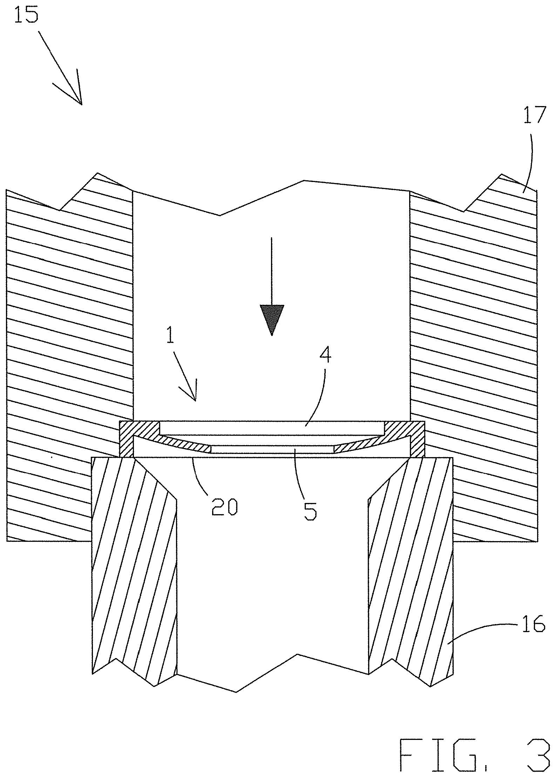

**Figure 3** shows a spraying end 15 comprising a nozzle 16, by way of example of the "spraying" type, which is sealingly joined to a nipple 17 with the interposition of gasket 1. In particular, nozzle 16 and nipple 17 communicate with each other by means of the hole 2 of gasket 1. By way of example, nozzle 16 and nipple 17 have a circular cross section and can be crossed by a fluid so that the latter, while flowing, leaves nipple 17 and enters nozzle 16. The flowing direction of the fluid is indicated by an arrow in figure 3.

Nozzle 16 is shaped so as to be at least partially flared from an inlet mouth 20 (at which nozzle 16 is joined to nipple 17) toward an outlet mouth thereof (not shown in the figure).

Gasket 1 is tightened between the mouth 20 of nozzle 16 and the nipple 17 at edge 7 and at the outermost portion of flange 6. Gasket 1 is arranged so that the inlet mouth 4 faces nozzle 16 and the outlet mouth 5 faces nipple 17. Wall 3 preferably lies at the flaring of nozzle 16. By flowing from nipple 17 into nozzle 16, the fluid crosses gasket 1, thus entering at mouth 4, flowing through hole 2 and leaving at mouth 5. Due to the decreasing size of the cross section of hole 2 from mouth 4 to mouth 5, when a fluid crosses gasket 1, the wall 3 of the latter deforms in radial direction by being pressed against the inner wall of nozzle 16. In particular, when the fluid passes, the flange portion which is not tightened between nozzle 16 and nipple 17 and the portion of wall 3 between the mouths 4 and 5 rest against the inner wall of nozzle 16 at the flaring. This prevents the fluid from reaching the area at which the mouth 20 of nozzle 16 is pressed against the edge 7 of gasket 1, therefore giving the latter a better tightness as compared to current gaskets.

Advantageously, gasket 1 is easier to be handled by an operator who must introduce it into nipple 17, as compared to an O-ring of equal outer diameter. Moreover, gasket 1 is more deformable both in axial direction and in radial direction, the effort being equal. With reference to nozzles and respective nipples made of polymeric material (suitable, by way of example, for uses for relative pressures which are not greater than 10 bar), this allows any coupling tolerance errors to be compensated for without the need to increase the tightening of the gasket between the nozzle and the nipple thereof.

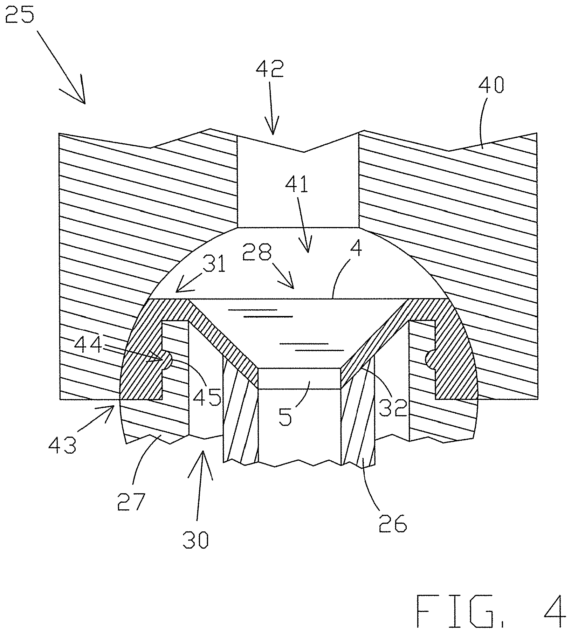

**Figure 4** shows a spraying end 25 comprising a nozzle 26, by way of example of the "spraying" type, which is sealingly joined to a nipple 40 with the interposition of a gasket 28 which forms a variant of the gasket 1 disclosed above. End 25 further comprises a partially spherical component 27, crossed in the middle by a pipe 30 in which nozzle 26 is partially accommodated and is integrally connected to component 27. Nipple 40 comprises a seat 41, which is almost semispherical, in which component 27 is at least partially accommodated and rotatable, so as to form a ball joint which connects nozzle 26 to nipple 40. The latter comprises a pipe 42 by means of which nozzle 26 communicates with a fluid delivery pipe (not shown in the figure). By way of example, nipple 26 and pipe 30 have a circular cross section. The nozzles connected to the nipples by means of ball joints are substantially known. Therefore, further details will not be provided.

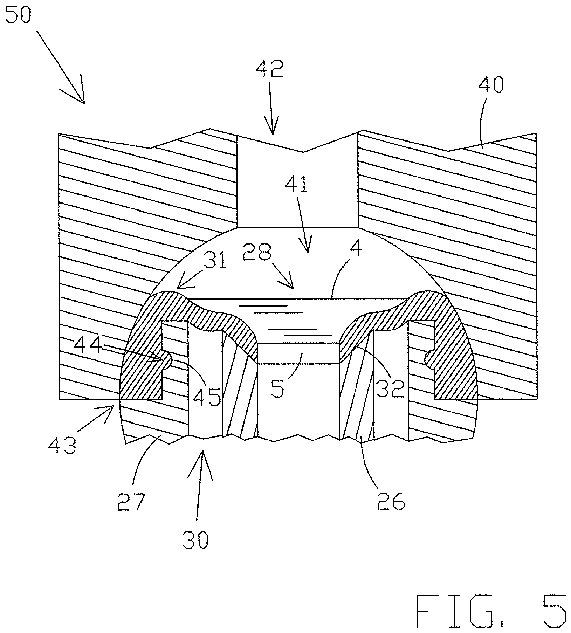

Gasket 28 is different from gasket 1 in that rather than edge 7 being cylindrical, it is almost spherical. Gasket 28 is integrally connected to component 27 at a seat 43 made at an inlet mouth 31 of component 27 (arranged at the top in figure 5). More precisely, gasket 28 is accommodated in seat 43 at edge 7, so that mouth 4 (of gasket 28) is arranged at mouth 31 (of component 27). Gasket 28 is also arranged so that wall 3 penetrates pipe 30 so that mouth 5 lies inside the latter.

As can be seen in figure 3, edge 7 preferably has the same radius of curvature as component 27. In addition, gasket 28 is preferably connected to component 27 so that there is continuity between the outer surface of the latter and the outer surface of edge 7. At said outer surfaces, component 27 and gasket 28 are in contact with the wall of nipple 40 which delimits seat 41.

Gasket 28 is different from gasket 1 also in that at the face facing wall 3, the edge 7 has a projection 44 which protrudes radially. Projection 44 is preferably annular, and even more preferably arranged parallel to flange 6. Projection 44 is accommodated in a recess 45 made at seat 43. This ensures the axial and transversal coupling between gasket 28 and the spherical component 27.

Similarly to the nozzle 16 of end 15, nozzle 26 is at least partially flared from an inlet mouth 32 (accommodated in pipe 30) toward an outlet mouth thereof (not shown in the figure). Nozzle 26 is preferably accommodated in pipe 30 so that the wall 3 of gasket 28 is in contact with the inner wall of nozzle 26 at the flaring.

End 25 can be crossed by a fluid so that once the latter has reached seat 41 coming from pipe 42, it crosses gasket 28, thus entering at mouth 4, flowing through hole 2 and leaving at mouth 5, so as to enter nozzle 26. Due to the decreasing size of the cross section of hole 2 from mouth 4 to mouth 5, when the fluid crosses gasket 28, it presses wall 3 against the inner wall of nozzle 26 at the flaring. This prevents the fluid from reaching the area at which the mouth 31 of component 27 is pressed against flange 6 and the edge 7 of gasket 28, thus giving the latter a better tightness as compared to current gaskets.

Advantageously, in addition to acting as a sealing gasket, the gasket 28, by means of wall 3 between nipple 40 and nozzle 26, acts as sealing gasket between nipple 40 and component 27 by means of flange 6 and edge 7, regardless of the orientation of nozzle 26 with respect to nipple 40. Therefore, there is a single gasket by means of which the fluid from pipe 42 is prevented from coming out of end 25, unless through nozzle 26, thus keeping the tightness on both the couplings.

**Figure 5** shows a spraying end 50 which is different from the spraying end 25 in that nozzle 26 is connected to component 27 so as to slightly and axially compress gasket 28 at wall 3. Due to said compression, the tightness between nipple 40 and nozzle 26 is better.

By way of example, the connection between nozzle 26 and component 27 is of known type and is disclosed in Italian Patent No. 1356297 (filed under no. MI2004A000541) assigned to the same Applicant. Said connection causes a translation of nozzle 26 in component 27. Due to said translation, nozzle 26 moves close to nipple 40. Preferably, said translation gives rise to the axial compression of gasket 28. Based on the description provided for a preferred embodiment, it is obvious that some changes may be made by those skilled in the art without departing from the scope of the invention as defined by the following claims.

## Claims

1. A spraying end (25, 50) comprising:
• a spray nozzle (26) including an inlet mouth (32) at which said nozzle (26) can be coupled to a sealing gasket (28), said nozzle (26) being at least partially flared from the inlet mouth (32) of said nozzle (26) toward an outlet mouth thereof;
• a sealing gasket (28) coupled to said nozzle (26) and comprising a through hole (2) delimited by at least one elastically deformable wall (3), said through hole (2) having a cross section whose size decreases from a circular inlet mouth (4) of said hole (2) toward a circular outlet mouth (5) thereof;
• a nipple (40) coupled to said nozzle (26), by means of said sealing gasket (28), at an inlet mouth (32) of said nozzle (26),
said delimiting wall (3) of said gasket (28) lying at a flaring of said nozzle (26) so as to sealingly couple said nipple (40) to said nozzle (26) when a fluid passes from said nipple (40) into said nozzle (26), said spraying end (25) being **characterized in that** it further comprises:
• an at least partially spherical component (27) comprising a pipe (30) in which said nozzle (26) is at least partially accommodated and integrally connected to said component (27);
• an at least partially spherical seat (41) made at said nipple (40) and in which said component (27) is at least partially accommodated and rotatable,
said gasket (28) being integrally connected to said at least partially spherical component (27) and being in contact with a wall of said nipple (40) delimiting said seat (41), so as to sealingly couple said nipple (40) to said component (27).

2. A spraying end (25) according to claim 1, **characterized in that** the ratio of the diameter (D1) of said outlet mouth (5) of said hole (2) to the diameter (D2) of said inlet mouth (4) of said hole (2) is greater than 0.0111.

3. A spraying end (25) according to claim 1, **characterized in that** the ratio of the reciprocal distance (H1) of said inlet and outlet mouths (4, 5) of said hole (2) to the diameter (D1) of said outlet mouth (5) of said hole (2) is greater than 0.125.

4. A spraying end (25) according to claim 1, **characterized in that** said delimiting wall (3) of said hole (2) is at least partially shaped like a truncated cone.

5. A spraying end (25) according to claim 1, **characterized in that** said delimiting wall (3) radially widens to form a flange (6) at said inlet mouth (4) of said hole (2).

6. A spraying end (25) according to claim 5, **characterized in that** said flange (6) extends in axial direction toward said outlet mouth (5) of said hole (2) to form a cylindrical or at least partially spherical edge (7) which radially delimits said gasket (1, 28).

7. A spraying end (25) according to claim 6, **characterized in that** said edge (7) comprises, at a face facing the delimiting wall (3), a radially protruding projection (44).

## Patentansprüche

1. Sprühende (25, 50) bestehend aus:
* eine Sprühdüse (26), die eine Einlassmündung (32) umfasst, wobei die Düse (26) mit einer Dichtung (28) gekoppelt sein kann, wobei die Düse (26) zumindest teilweise von der Einlassmündung (32) der Düse (26) zu einer Auslassmündung derselben aufgeweitet ist;
* eine Dichtung (28) die mit der Düse (26) gekoppelt ist und ein Durchgangsloch (2) aufweist, das durch mindestens eine Wand (3) elastisch deformierbar begrenzt ist, wobei das Durchgangsloch (2) mit einem Querschnitt versehen ist, deren Abmessungen von einem kreisförmigen Einlassmündung (4) des Durchgangslochs (2) zu einer kreisförmigen Auslassmündung (5) desselben reduziert sind;
* einen Nippel (40), der mit der Düse (26), mittels der Dichtung (28), in Übereinstimmung mit einer Einlassmündung (32) der Düse (26), gekoppelt ist
wobei die Begrenzungswand (3) der Dichtung (28) sich auf ein Aufflackern der Düse (26) anliegt, um den Nippel (40) mit der Düse (26) abzudichten, wenn ein Fluid von dem Nippel (40) in die Düse (26) übergeht, wobei das Sprühende (25) ist **dadurch gekennzeichnet, dass** er ferner umfasst:
• eine zumindest teilweise kugelförmige Komponente (27), umfassend ein Rohr (30), in dem die Düse (26) zumindest teilweise untergebracht ist und mit der Komponente (27) einstückig verbunden ist;
• einen Sitz (41), der zumindest teilweise kugelförmig auf dem Nippel (40) ausgebildet ist und in dem die Komponente (27) mindestens teilweise drehbar aufgenommen ist,
wobei die Dichtung (28) an der mindestens teilweise kugelförmige Komponente (27) einstückig verbunden ist und in Kontakt mit einem Wand des Nippels (40) ist, die den Sitz (41) abgrenzt, um den Nippel (40) an der Komponente (27) dichtend anzukoppeln.

2. Sprühende (25) nach Anspruch 1, **dadurch gekennzeichnet, dass** das Verhältnis zwischen dem Durchmesser (D1) der Auslassmündung (5) des Durchgangslochs (2) und dem Durchmesser (D2) der Einlassmündung (4) des Durchganglochs (2) größer als 0,0111 ist.

3. Sprühende (25) nach Anspruch 1, **dadurch gekennzeichnet, dass** das Verhältnis zwischen dem gegenseitigen Abstand (H1) zwischen den Einlass- und Auslassmündungen (4, 5) des Durchgangslochs (2) und dem Durchmesser (D1) der Auslassmündung (5) des Durchgangslochs (2) größer als 0,125 ist.

4. Sprühende (25) nach Anspruch 1, **dadurch gekennzeichnet, dass** die Begrenzungswand (3) des Durchgangslochs (2) zumindest teilweise als Kegelstumpf ausgebildet ist.

5. Sprühende (25) nach Anspruch 1, **dadurch gekennzeichnet, dass** sich die Begrenzungswand (3) radial erweitert, um einen Flansch (6) entsprechend der Einlassmündung (4) des Durchgangslochs (2) zu bilden.

6. Sprühende (25) nach Anspruch 5, **dadurch gekennzeichnet, dass** der Flansch (6) sich axial in Richtung auf die Auslassmündung (5) des Durchgangslochs (2) erstreckt, um eine zylindrisch oder mindestens teilweise kugelige Kante (7) zu bilden, die Dichtung (1, 28) radial begrenzt.

7. Sprühende (25) nach Anspruch 6, **dadurch gekennzeichnet, dass** die Kante (7) eine Fläche umfasst, die der Begrenzungswand (3) gegenübersteht und einen radialen Vorsprung (44) aufweist.

## Revendications

1. Extrémité de pulvérisation (25, 50) comprenant:
* une buse de pulvérisation (26) comprenant une bouche d'entrée (32) en correspondance de laquelle la buse (26) peut être couplée à un joint d'étanchéité (28), la buse (26) étant au moins partiellement évasée depuis la bouche d'entrée (32) de la buse (26) à une bouche de sortie de celle-ci;
* un joint d'étanchéité (28) couplé à la buse (26) et comprenant un trou traversant (2) délimité par au moins une paroi (3) déformable élastiquement, le trou traversant (2) ayant une section transversale dont les dimensions sont réduites d'une bouche d'entrée circulaire (4) du trou (2) à une bouche de sortie circulaire (5) de celui-ci;
* un raccord (40) couplé à la buse (26), au moyen de le joint d'étanchéité (28), en correspondance avec une bouche d'entrée (32) de la buse (26),
la paroi de délimitation (3) du joint (28) se trouve en correspondance avec un évasement de la buse (26), de manière coupler de manière étanche le raccord (40) à la buse (26) lorsqu'un fluide passe du raccord (40) dans la buse (26), l'extrémité de pulvérisation (25) étant **caractérisée en ce qu'**elle comprend en outre:
• un composant au moins partiellement sphérique (27) comprenant un tube (30) dans lequel la buse (26) est au moins partiellement logée et est intégralement reliée au composant (27);
• un siège (41) au moins partiellement sphérique formé en correspondance du raccord (40) et dans lequel le composant (27) est au moins partiellement logé avec possibilité de rotation, ledit joint (28) étant solidaire du composant (27) au moins partiellement sphérique et étant en contact avec l'une des parois du raccord (40) qui délimite le siège (41), de manière à coupler dans des conditions d'étanchéité le raccord (40) au composant (27).

2. Extrémité de pulvérisation (25) selon la revendication 1, **caractérisée en ce que** le rapport entre le diamètre (D1) de la bouche de sortie (5) du trou (2) et le diamètre (D2) de la bouche d'entrée (4) du trou (2) est supérieur à 0,0111.

3. Extrémité de pulvérisation (25) selon la revendication 1, **caractérisée en ce que** le rapport entre la distance mutuelle (H1) entre les bouches d'entrée et de sortie (4, 5) du trou (2) et le diamètre (D1) de la bouche de sortie (5) du trou (2) est supérieure à 0,125.

4. Extrémité de pulvérisation (25) selon la revendication 1, **caractérisée en ce que** la paroi de délimitation (3) du trou (2) est au moins partiellement formée comme un cône tronqué.

5. Extrémité de pulvérisation (25) selon la revendication 1, **caractérisée en ce que** la paroi de délimitation (3) s'élargit radialement de manière à former un rebord (6) en correspondance avec la bouche d'entrée (4) du trou (2).

6. Extrémité de pulvérisation (25) selon la revendication 5, **caractérisée en ce que** le rebord (6) s'étend axialement vers la bouche de sortie (5) du trou (2) de manière à former un bord (7) cylindrique ou au moins partiellement sphérique, qui délimite radialement le joint d'étanchéité (1, 28).

7. Extrémité de pulvérisation (25) selon la revendication 6, **caractérisée en ce que** le bord (7) comprend, en correspondance avec une surface tournée vers la paroi de délimitation (3), une saillie (44) tournée radialement.
